# EUROPEAN PATENT SPECIFICATION

(11) **EP 2 859 825 B1**
(45) Date of publication and mention of the grant of the patent: **20.03.2019**
(21) Application number: 13187797.9
(22) Date of filing: 08.10.2013
(51) Int. Cl.: A47J 43/07, A47J 43/044

(54) **A motorized household appliance for processing food**
Motorisiertes Haushaltsgerät zur Nahrungszubereitung
Appareil ménager motorisé pour le traitement des aliments

(43) Date of publication of application: 15.04.2015
(73) Proprietor: BSH Hausgeräte GmbH, 81739 München (DE)
(72) Inventor: Golavsek, Samo, 3312 Prebold (SI); Mlinaric, Gregor, 3230 Sentjur (SI); Semeja, Uros, 3327 Smartno ob Paki (SI)

(56) References cited:
- WO-A1-96/10943
- WO-A1-03/086158
- WO-A2-2007/015189
- DE-A1- 10 244 715
- US-A1- 2003 007 418

## Description

### Background of the invention

The invention concerns a motorized household appliance for processing food comprising a processing bowl, a spindle, a pin supporting the spindle, a clutch connecting the spindle to the driving means of the appliance, a working tool attached to the spindle, a lid for preventing access of the user to said working tool and holding the processed food within the bowl during operation, a friction member arranged between the spindle and the pin for rapidly stopping the rotation of the spindle when the lid is lifted from the vessel.

### State of the Art

Motorized household appliances for processing food with automatic stopping of the working tool, usually a blade, are already known. There are solutions known involving friction members as well as several solutions involving different approaches, e.g. a spring mechanism, that effect the decoupling of the spindle with a working tool from the driving means upon removal of the lid.

WO2007/015189 A2 - describes a food processing device comprising a container with a central shaft mounted on the container bottom, a lid covering the container, a processing tool unit supporting a food processing tool, its upper end being couplable with a drive unit through the lid, its lower end having an elongated cavity for rotatably engaging with the central shaft and allowing for pivotal movement about the axis of the central shaft, the elongated cavity being provided with a bearing part, characterized in that the bearing part has a predetermined shape on its inner surface for jamming with the central shaft during the pivotal movement.

EP0784445 B1 - describes a domestic appliance with a rotatable knife, such as a mincer, comprising a bowl which is closed by a removable cover and in which there is a vertically extending rotatable shaft, the lower end of which carries a knife and is engaged in a bearing mounted fixed to the bottom of the bowl and the upper end of which projects freely through an opening made in the cover and a motor block comprising a casing mounted in a removable manner on the cover and enclosing an electric motor the output shaft of which is fixed to an entraining device opening on the bottom of the casing and designed to become coupled to the free upper end of the shaft bearing the knife, characterized in that it also comprises a device for braking the rotational movement of the knife as soon as the motor block is removed, this braking device comprising a cylindrical tubular collar, made of a plastic material, which acts as a brake and is embedded in the opening of the cover, and through which the free upper end of the shaft bearing the knife passes with a small peripheral play, said collar acting by friction on the upper free end of the shaft bearing the knife at the time of the withdrawal of the motor block, said shaft having started to rotate idly as a result of its uncoupling from the entraining device fixed to the output shaft of the motor.

US 2003/0007418 A1 discloses a motorized household appliance for processing food comprising a processing bowl, a spindle, a pin supporting the spindle, a clutch connecting the spindle to the driving means of the appliance, a working tool attached to the spindle, a lid for preventing access of the user to said working tool and holding the processed food within the processing bowl during operation, a friction member arranged between the spindle and the pin for rapidly stopping the rotation of the spindle when the lid is lifted from the processing bowl. The known state of the art solutions present several problems, for example increased breaking forces because of two gliding surfaces or the requirement for complicated design of the friction braking mechanism comprised within the lid.

### Problem to be solved

It is the objective of the present invention to provide an improved architecture of automatic stopping of the working tool in a motorized household appliance in order to increase the efficiency as well as the safety of the user.

### Solution according to the invention

The objective is achieved by a motorized household appliance for processing food according to Claim 1.

The advantage of the motorized household appliance for processing food according to the invention is that it provides a single gliding area as compared to two opposing friction areas described in prior art which reduces the undesired force of braking during operation of the appliance and prevents loss of energy.

A further advantage is that the friction member is located in the lower region of the spindle where it can be mounted in a simple manner or alternatively built into the spindle or the pin during production while the known solutions use a friction member built into the lid which requires a significantly more complicated design.

### Embodiments of the invention

Advantageous embodiments that can be implemented by themselves or in combination are described in dependent claims.

According to the invention, the gliding surface is of a basically circular shape with the height of less than 2 mm, preferably less than 0.5 mm. The circular shape is simple to produce and reduces production costs. The height of the gliding surface in the introduced range results in lower friction forces as compared to larger heights. Similarly, a smaller gliding surface in the introduced height range also prevents excessive build-up of heat which can possibly result in structural damage of the gliding surface, the spindle or the pin.

In an advantageous solution, the upright alignment of the spindle is instantaneously disturbed upon removal of the clutch from the top of the spindle, therefore tilting occurs and the friction member establishes contact with the friction surface to decelerate and stop the rotation of the spindle within 1.5 seconds. The tilting is required in order to provide contact between the friction member and the friction surface. This contact results in rapid deceleration of the rotation of the spindle and the working tool. It is optimal to keep the distance between the friction member and the friction surface during operation of the appliance to the minimum to ensure a rapid deceleration upon the removal of the lid and the tilting of the spindle. The said short stopping time of the spindle and the working tool is a required safety feature of motorized household appliances in case of opening of the lid during operation.

Upright position according to this invention means the position of the spindle during operation which is aligned with the vertical axis of the processing bowl and is the position in which the spindle rotates during normal operation of the appliance determined by positioning of the spindle when connected with the pin and the clutch.

According to the invention, the friction member is made of a high-friction material, such as rubber. High friction is required to reduce to the minimum the time needed for deceleration of the spindle to a complete stop. Rubber is a very suitable and a low cost material, however other high-friction materials can be used.

Preferably, the friction member is in the shape of a ring completely encompassing the circumference of the spindle or the pin. Considering the circular geometry of the friction surface, it is preferable to implement a ring shaped friction member. The friction forces and rotational stability of the system is optimal when the friction member completely encompasses the circumference of the friction area. The flexibility and the eventual wear of the friction member also provide even distribution of braking forces over a significant area of the friction member and friction surface.

In a further preferred embodiment, the removal of the lid results in slight tilting of the spindle away from the vertical rotating position as it loses support in the clutch region resulting in the contact of the friction member with either the pin or the spindle and a rapid deceleration of rotation. Such a configuration does not require an active mechanism for the tilting of the spindle to occur. The tilting effectively occurs very quickly as a result of instabilities inherently produced during the rotation of the spindle as well as the low contact point of the gliding surface with the spindle.

Moreover, it is conceivable that upon lifting the lid, the spindle and the working tool preferably stop rotating within 1.5 seconds. In this manner, safety standards for the operation of motorized household appliances are met.

According to one possible embodiment, the friction member can be integrally built into the inner cavity of the spindle or into the pin. This facilitates the production process and reduces costs of production. It also eliminates the risk of the friction member accidentally falling out of place during handling of the household appliance.

### Brief description of the drawings

The invention is explained in more detail below on the basis of an exemplary embodiment and with reference to schematic drawings in which:
Figure 1 shows a perspective view of the chopper attachment;
Figure 2 shows a schematic representation of the positioning of the pin and the spindle within the chopper attachment;
Figure 3 shows a close-up view of the pin and spindle with the friction member and gliding surface and;
Figure 4 shows a schematic representation of the tilted spindle after the lid of the chopper attachment has been removed.

### Detailed description of the invention

To achieve the shortest possible stoppage time, it is desirable to increase as much as possible the friction surface 12 between the rotating and stationery parts as well as to use materials with very low gliding properties - the purpose being to maximize friction. The materials must be able to withstand high forces that arise from such rapid stopping of the working tool 5, therefore most known solutions use at least in part, metallic bearings. According to this invention, elastic (e.g. rubber) materials with high friction are used.

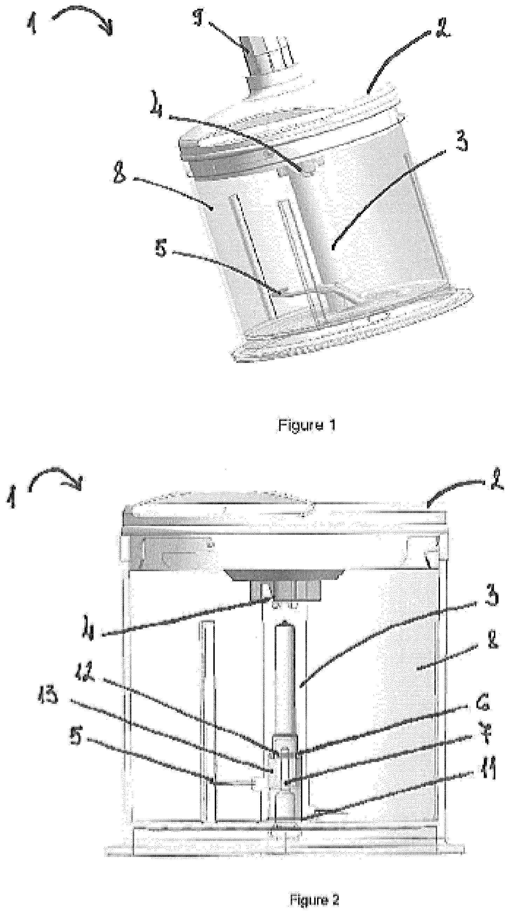

Figure 1 shows a perspective view of the main parts of the motorized household appliance 1, more specifically, a chopper or a grinder, with the processing bowl 8, a spindle 3 with a working tool 5, in this case a blade, a clutch 4 integrated into the lid 2 and the driving means 9 of the appliance 1 - not shown in entirety - which in the described embodiment is a stick mixer driving unit.

Figure 2 shows the motorized household appliance 1 in operating alignment where the lid 2 is fitted onto the processing bowl 8 and the clutch 4 engages the spindle 3 so as to keep it fixed in the upright position in relation to the processing bowl 8. As a result, the spindle 3 is free to rotate around its axis when the appliance 1 is in operation. Said rotation is supported through the contact of the spindle 3 with the gliding surface 11 which is located in the bottom third 10 of the spindle 3. Positioning of the gliding surface 11 in the bottom third 10 of the spindle 3 provides sufficient destabilization immediately after the lid 2 has been removed from the processing bowl 8 that the tilting of the spindle 3 occurs rapidly.

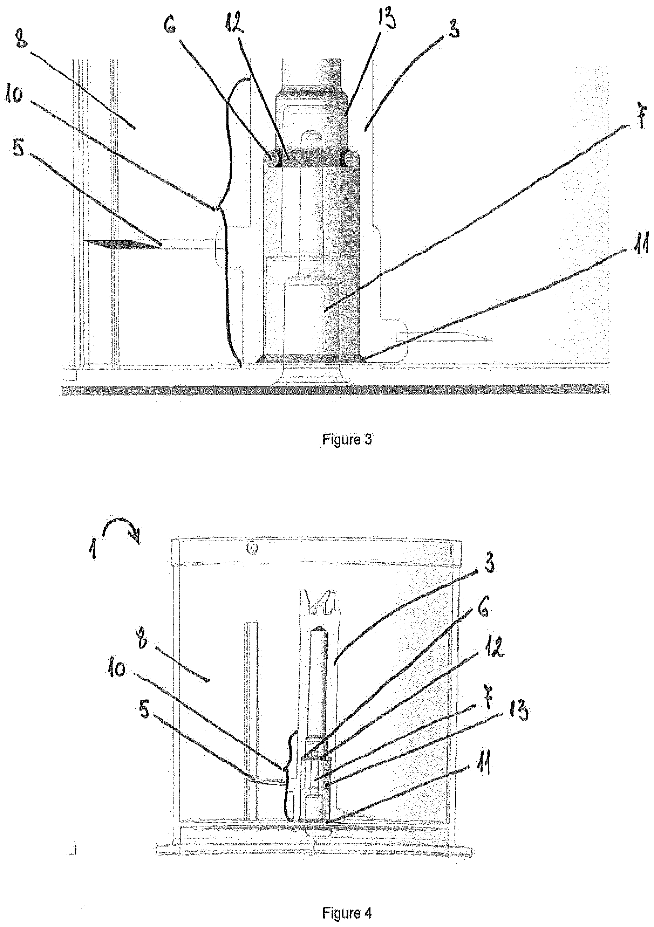

Figure 3 shows a close-up view of the operating alignment described in Figure 2. It can be seen that as long the spindle 3 and the working tool 5 attached to it are supported in the upright operating position both by the clutch 4 on top and by the gliding surface 11 in the bottom third 10 of the spindle 3, the friction member 6 is not in contact with the friction surface 12 and a small distance between the latter two is maintained. This, in turn, means that there is no braking effected onto the spindle 3 through the friction member 6. The distance between the friction member 6 and the friction surface 12 in during operation is preferably less than 5mm, even more preferably less than 2 mm.

Figure 4 shows the configuration of the processing bowl 8, the spindle 3 with the working tool 5 and the pin 7 after the lid 2 has been removed. As soon as the lid 2 is removed, the upper support for the spindle 3 previously provided by the clutch 4 and the lid 2 is gone. As this support is needed for the spindle 3 to remain in the upright position, relative to the processing bowl 8, the spindle 3 rapidly tilts slightly which results in the friction member 6 making contact with the friction surface 12. This produces high frictional forces and a rapid deceleration and stoppage occurs of the rotating spindle 3 and the working tool 5, preferably within the 1.5 seconds required by safety standards. It should be noted that the friction member 6 can be positioned either in the inner cavity 13 of the spindle 3 or on the pin 7. Inversely, the friction surface 12 should be positioned directly opposite the friction member 6, which also means it is either on the pin 7 or in the inner cavity 13 of the spindle 3. The tilting required to provide contact of the friction member 6 with the friction section 12 is preferably less than 10 degrees, more preferably less than 5 degrees, even more preferably less than 2 degrees from the axis of the spindle 3 in the said upright position.

In one embodiment, the friction member 6 is introduced as a rubber belt within the spindle 3. When the lid is removed, the upper support for the spindle previously provided by the contact of the spindle with the clutch is no longer present which results in tilting of the spindle 3.

### List of References

1- motorized household appliance
2- lid
3- spindle
4- clutch
5- working tool
6- friction member
7- pin
8- processing bowl
9- driving means of the appliance
10- bottom third of the spindle
11-gliding surface
12- friction surface
13- inner cavity of the spindle

## Claims

1. A motorized household appliance (1) for processing food comprising at least:
- a processing bowl (8),
- a spindle (3),
- a pin (7) supporting the spindle (3),
- a clutch (4) connecting the spindle (3) to the driving means of the appliance (1),
- a working tool (5) attached to the spindle (3),
- a lid (2) for preventing access of the user to said working tool (5) and holding the processed food within the processing bowl (8) during operation,
- a friction member (6) arranged between the spindle (3) and the pin (7) for rapidly stopping the rotation of the spindle (3) when the lid (2) is lifted from the processing bowl (8),
**characterized in that** the spindle (3) is supported by the pin (7) on its circumference in the bottom third (10) of the height of the spindle (3) as measured from the bottom of the processing bowl (8) and that the spindle (3) is supported through a single gliding surface (11), which is of a basically circular shape with the height of less than 2 mm, preferably less than 0.5 mm, wherein said friction member (6) is made of a high-friction material, such as rubber, and wherein said friction member (6) is located either on the inner cavity (13) of the spindle (3) or on the pin (7).

2. The household appliance (1) according to claim 1, **characterized in that** upon removal of the clutch (4) from the top of the spindle (3), the upright alignment of the spindle (3) is instantaneously disturbed, therefore tilting occurs and the friction member (6) establishes contact with the friction surface (12) to decelerate and stop the rotation of the spindle (3).

3. The household appliance (1) according to any of the preceding claims, **characterized in that** the friction member (6) is in the shape of a ring completely encompassing the circumference of the spindle (3) or the pin (7).

4. The household appliance (1) according to any of the preceding claims, **characterized in that** the removal of the lid (2) results in slight tilting of the spindle away from the vertical rotating position as it loses support in the clutch (4) region resulting in the contact of the friction member (6) with either the pin (7) or the spindle (3) and a rapid deceleration of rotation.

5. The household appliance (1) according to any of the preceding claims, **characterized in that** upon lifting the lid (2), the spindle (3) and the working tool (5) preferably stop rotating within 1.5 seconds.

6. The household appliance (1) according to any of the preceding claims, **characterized in that** the friction member is integrally built into the inner cavity (13) of the spindle (3) or into the pin (7).

## Patentansprüche

1. Motorisiertes Haushaltsgerät (1) zur Nahrungszubereitung, mindestens umfassend:
- einen Zubereitungsbehälter (8),
- eine Spindel (3),
- einen Stift (7), der die Spindel (3) stützt,
- eine Kupplung (4), welche die Spindel (3) mit dem Antriebsmittel des Geräts (1) verbindet,
- ein Arbeitswerkzeug (5), das an der Spindel (3) angebracht ist,
- einen Deckel (2), der den Zugang des Benutzers zu genanntem Werkzeug (5) verhindert und die verarbeitete Nahrung während des Betriebs im Zubereitungsbehälter (8) hält,
- ein Reibungselement (6), das zwischen der Spindel (3) und dem Stift (7) angebracht ist, um die Drehung der Spindel (3) schnell zu stoppen, wenn der Deckel (2) vom Zubereitungsbehälter (8) abgehoben wird,
**dadurch gekennzeichnet, dass** die Spindel (3) vom Stift (7) an dessen Kreisumfang im unteren Drittel (10) der Höhe der Spindel (3) gestützt wird, gemessen vom Boden des Zubereitungsbehälters (8), und dass die Spindel (3) durch eine einzelne Gleitfläche (11) gestützt wird, die eine im Wesentlichen runde Form mit einer Höhe von weniger als 2 mm aufweist, vorzugsweise weniger als 0,5 mm, wobei das Reibungselement (6) aus einem Material mit hoher Reibung wie Gummi besteht und wobei sich das Reibungselement (6) entweder auf der inneren Aushöhlung (13) der Spindel (3) oder auf dem Stift (7) befindet.

2. Haushaltsgerät (1) nach Anspruch 1, **dadurch gekennzeichnet, dass**, nachdem die Kupplung (4) von der Spitze der Spindel (3) entfernt wurde, die senkrechte Ausrichtung der Spindel (3) unmittelbar gestört wird, so dass eine Schiefstellung auftritt und das Reibungselement (6) einen Kontakt zur Reibungsfläche (12) herstellt, um die Drehung der Spindel (3) zu verlangsamen und zu stoppen.

3. Haushaltsgerät (1) nach einem der vorhergehenden Ansprüche, **dadurch gekennzeichnet, dass** das Reibungselement (6) die Form eines Rings hat und den Kreisumfang der Spindel (3) oder des Stifts (7) vollständig umgibt.

4. Haushaltsgerät (1) nach einem der vorhergehenden Ansprüche, **dadurch gekennzeichnet, dass** das Entfernen des Deckels (2) zu einer leichten Neigung der Spindel aus der vertikalen Rotationsposition führt, wenn sie die Abstützung im Bereich der Kupplung (4) verliert, was zu einem Kontakt des Reibungselements (6) mit entweder dem Stift (7) oder der Spindel (3) sowie einer raschen Verlangsamung der Drehung führt.

5. Haushaltsgerät (1) nach einem der vorhergehenden Ansprüche, **dadurch gekennzeichnet, dass** sich die Spindel (3) und das Arbeitswerkzeug (5) nach dem Abheben des Deckels (2) vorzugsweise innerhalb von 1,5 Sekunden aufhören zu drehen.

6. Haushaltsgerät (1) nach einem der vorhergehenden Ansprüche, **dadurch gekennzeichnet, dass** das Reibungselement fest in der inneren Aushöhlung (13) der Spindel (3) oder des Stifts (7) verbaut ist.

## Revendications

1. Appareil ménager motorisé (1) pour le traitement des aliments, comprenant au moins :
- un bol de traitement (8),
- un axe (3),
- une broche (7) soutenant l'axe (3),
- un embrayage (4) reliant l'axe (3) au moyen d'entraînement de l'appareil (1),
- un outil de travail (5) fixé à l'axe (3),
- un couvercle (2) pour empêcher l'accès de l'utilisateur audit outil de travail (5) et maintenir les aliments traités à l'intérieur du bol de traitement (8) durant le fonctionnement,
- un élément de friction (6) disposé entre l'axe (3) et la broche (7) pour arrêter rapidement la rotation de l'axe (3) lorsque le couvercle (2) est soulevé du bol de traitement (8),
**caractérisé en ce que** l'axe (3) est soutenu par la broche (7) sur sa circonférence dans le tiers inférieur (10) de la hauteur de l'axe (3) telle que mesurée à partir du bas du bol de traitement (8) et **en ce que** l'axe (3) est soutenu à travers une seule surface de glissement (11), d'une forme essentiellement circulaire dont la hauteur est inférieure à 2 mm, de préférence inférieure à 0,5 mm, dans lequel ledit élément de friction (6) est réalisé en un matériau à coefficient de frottement élevé, comme le caoutchouc, et dans lequel ledit élément de friction (6) est situé soit sur la cavité intérieure (13) de l'axe (3) ou sur la broche (7).

2. Appareil ménager (1) selon la revendication 1, **caractérisé en ce que** suite au retrait de l'embrayage (4) du dessus de l'axe (3), l'alignement vertical de l'axe (3) est instantanément perturbé, raison pour laquelle une inclinaison survient et l'élément de friction (6) établit un contact avec la surface de friction (12) afin de décélérer et d'arrêter la rotation de l'axe (3).

3. Appareil ménager (1) selon l'une quelconque des revendications précédentes, **caractérisé en ce que** l'élément de friction (6) revêt la forme d'un anneau incluant intégralement la circonférence de l'axe (3) ou de la broche (7).

4. Appareil ménager (1) selon l'une quelconque des revendications précédentes, **caractérisé en ce que** le retrait du couvercle (2) résulte en une légère inclinaison de l'axe à l'écart de la position de rotation verticale suite à la perte de soutien dans la région de l'embrayage (4) résultant en le contact de l'élément de friction (6) soit avec la broche (7) ou l'axe (3) et une décélération rapide de la rotation.

5. Appareil ménager (1) selon l'une quelconque des revendications précédentes, **caractérisé en ce que** suite au levage du couvercle (2), l'axe (3) et l'outil de travail (5) s'arrêtent de préférence dans les 1,5 seconde.

6. Appareil ménager (1) selon l'une quelconque des revendications précédentes, **caractérisé en ce que** l'élément de friction est intégralement intégré à la cavité intérieure (13) de l'axe (3) ou à la broche (7).
